## Europäisches Patentamt

## European Patent Office

## Office européen des brevets

(19)

(11) Veröffentlichungsnummer: **0 225 401**
**B1**

(12) **EUROPÄISCHE PATENTSCHRIFT**

(45) Veröffentlichungstag der Patentschrift:
**15.02.89**

(21) Anmeldenummer: **85202049.4**

(22) Anmeldetag: **11.12.85**

(51) Int. Cl.⁴: **B01D 29/30, B01D 29/38**

(54) Vorrichtung zum Abscheiden fester Schmutzteilchen aus Kühlwasser für Kraftwerke u. dgl.

(43) Veröffentlichungstag der Anmeldung:
**16.06.87 Patentblatt 87/25**

(45) Bekanntmachung des Hinweises auf die Patenterteilung:
**15.02.89 Patentblatt 89/7**

(84) Benannte Vertragsstaaten:
**DE FR GB IT SE**

(56) Entgegenhaltungen:
**DE-U- 8 337 300**
**US-A- 4 130 478**

(73) Patentinhaber: **GEA Energietechnik GmbH & Co.,
Waldring 43, D-4630 Bochum 1(DE)**

(72) Erfinder: **Borchert, Werner, Dipl.-Ing., Stammsberg 17,
D-4330 Mülheim(DE)**

(74) Vertreter: **Ackmann, Günther, Dr.-Ing.,
Claubergstrasse 24 Postfach 10 09 22,
D-4100 Duisburg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Abscheiden fester Schmutzteilchen aus Kühlwasser für Kraftwerke u.dgl., welche aus einem vom Kühlwasser durchströmten rohrförmigen Gehäuse, an dessen Innenwand ein trichterförmiges, mit seiner Spitze in Strömungsrichtung weisendes Fangsieb befestigt ist und aus einer in der Fangkammer des Fangsiebes angeordneten Absaugeinrichtung besteht.

Zur Kühlung von Wärmetauschern in Dampfkraftwerken oder anderen Kraftwerkeinrichtungen werden große Mengen an Kühlwasser benötigt, das zur Vermeidung von Beschädigungen und Verstopfungen der Anlageteile von festen Schmutzteilchen, beispielsweise Holzstücke, Kunststoffteile, Blätter, Grashalme, Muscheln u.dgl. gereinigt werden muß. Während grobe Schmutzteile dieser Art durch vorgeschaltete Rechen zurückgehalten werden, finden zum Abscheiden feinerer Schmutzteilchen Vorrichtungen mit einem Fangsieb Verwendung, bei denen die abgefangenen Schmutzteilchen auf der Anströmseite des Fangsiebes abgesaugt werden. Zur Ablösung und Entfernung von Schmutzteilchen, die sich am Fangsieb, insbesondere in dessen Perforation festgesetzt haben und dieses verstopfen, ist aus der US-PS 2 275 958 für ein zylinderförmiges Fangsieb und aus dem DE-GM 8 337 300.4 für ein trichterförmiges Fangsieb eine Absaugeinrichtung bekannt, bei der ein Absaugtrichter gedreht und dabei dicht über die Anströmfläche des Fangsiebes geführt wird. Der Absaugtrichter ist mit einem axialen Rohrstutzen versehen, der einerseits in die Absaugleitung ragt und mit dem anderen geschlossenen Ende in der Spitze des trichterförmigen Fangsiebes drehbar gelagert ist. Diese Ausführungen haben jedoch den Nachteil, daß der über die Anströmfläche des Fangsiebes drehend geführte Saugarm häufig durch abgefangene gröbere Schmutzteilchen, z.B. Holzstückchen, Muscheln o.dgl. festklemmt und allein oder zusammen mit dem Fangsieb zerstört wird.

In der US-PS 4 130 478 ist eine Abscheidevorrichtung für ein Feststoffkonzentrat beschrieben, die aus einem zylinderförmigen Gehäuse besteht, in dem ein trichterartig geformtes Sieb angeordnet ist. Am oberen Einlaufende des Siebes ist eine Verteilerhaube axial verstellbar angeordnet, welche das tangential einströmende Medium durch einen ringförmigen Spalt gegen die Innenwand des Siebes lenkt. Die durch das Sieb strömende Flüssigkeit läuft an dessen Außenfläche nach unten in eine Fangkammer, die mit einem schrägen Boden und einem radial durch das Gehäuse ragenden Ablaufrohr für das vom Sieb abgefangene Konzentrat versehen ist. Der Abscheidevorrichtung ist eine Spüleinrichtung zugeordnet, die aus zwei gegen die Abströmfläche gerichteten drehbar gelagerten Spülarmen besteht, welche durch schräg angeordnete Düsen vom Druckspülwasser angetrieben werden, um die Siebschlitze freizuspülen. Außerdem ist auf der Anströmfläche ein Kratzer vorgesehen, der gemeinsam mit der Spüleinrichtung rotiert. Auch bei dieser Ausführung besteht die Gefahr, daß der Kratzer sich durch grobe Schmutzteilchen festsetzt, die Spüleinrichtung nicht mehr rotieren kann und damit die gesamte Spüleinrichtung funktionsunfähig ist. Der vorgesehene Abfluß an der Außenfläche des Siebes nach unten ist nur möglich, wenn die Mittelachse des Siebes lotrecht steht und die Abflußmenge mittels der Verteilerhaube entsprechend dosiert ist.

Der Erfindung liegt die Aufgabe zugrunde, eine Vorrichtung der gattungsgemäßen Art derart auszubilden, daß ein Festklemmen der Absaugeinrichtung auf der Anströmseite des Fangsiebes vermieden wird.

Diese Aufgabe wird durch die im Kennzeichen des Anspruchs 1 angegebenen Merkmale gelöst.

Ein wesentlicher Vorteil dieser Ausbildung besteht darin, daß auf der Anströmseite des Fangsiebes keine rotierenden Bauteile vorhanden sind, die durch grobe Schmutzteilchen festgeklemmt werden könnten und Zerstörungen herbeiführen würden. Auf der Anströmseite befindet sich lediglich ein feststehendes Ansaugrohr, während auf der Abströmseite ein drehender Spülarm vorhanden ist, der aber durch gröbere Schmutzteilchen nicht festklemmen kann, weil diese nicht durch das Fangsieb durchdringen können. Während bisher davon ausgegangen wurde, daß für ein wirksames Absaugen der Schmutzteilchen die Saugdüse möglichst nahe über die Anströmfläche des Fangsiebes bewegt werden müsse und der mitgeführte Spülarm auf der Abströmseite am Fangsieb haftende Schmutzteilchen lediglich lockere und unmittelbar in die Saugdüse spüle, wurde überraschend festgestellt, daß bei einer geeigneten Ausbildung der Spitze des Fangsiebes und einer geeigneten Anordnung eines feststehenden Absaugrohres eine zumindest gleich gute Reinigung des Fangsiebes erzielt wird, jedoch ohne die Gefahr eines Festklemmens beweglicher Teile durch Schmutzteilchen und mit einem wesentlich einfacheren Aufbau. Bei der in Abhängigkeit vom Verschmutzungsgrad in bestimmten Zeitabständen vorgenommenen Reinigung wird der Spülarm drehend dicht über die Abströmfläche bzw. Außenfläche des Fangsiebes geführt und Spülwasser mit hohem Druck, vorzugsweise impulsartig, gegen die Abströmfläche gespritzt. Das Spülwasser durchströmt das Fangsieb und spült die anhaftenden Schmutzteilchen zurück auf die Anströmseite des Fangsiebes, wo sie vom Kühlwasser etwa schraubenförmig in den zylinderförmigen Topf mitgerissen und dort vom Absaugrohr erfaßt werden.

Eine günstige Absaugung der Schmutzteilchen aus dem Topf wird dadurch erzielt, daß das Ansaugende des Absaugrohres etwa in der Ebene der Topföffnung angeordnet ist. Für eine besonders geeignete Zufuhr des Spülwassers in den Spülarm ist das innere Einlaufende des Spülarms an einem an der Drehwelle der Druckwasserspüleinrichtung befestigten Napf befestigt, dessen Rand gegen ein ringförmiges Gleitlager einer ortsfesten, mit der Spülwasserleitung verbundenen Verteilerkammer dicht anliegt. Um das unter hohem Druck stehende Spülwasser mit gleichmäßigem Druck über die gesamte Länge des Düsenschlitzes auf das Fangsieb zu spritzen, ist am Napf der Drehwelle diametral gegenüber dem Spülarm ein Hohlarm befestigt und sind die Hohlräume des Spülarms bzw. Hohlarms durch halbkreisförmige Rohrstücke verbunden. Die halbkreisförmigen Rohrstücke tragen außerdem zur Stabilität bei.

Je nach der Art der anfallenden Schmutzteilchen kann der Düsenschlitz des Spülarms verschieden ausgebildet sein. Bei körniger Verschmutzung ist der Spülarm zweckmäßig mit einem länglichen Düsenschlitz versehen, der sich längs der Abströmfläche des Fangsiebes etwa vom Boden des Topfes bis etwa zum Außenrand des Fangsiebes erstreckt. Bei faseriger Verschmutzung sollte der Spülarm entlang der Abströmfläche des Fangsiebes etwa vom Boden des Topfes bis etwa zum Außenrand des Fangsiebes mit einer Vielzahl schräg zur Längsachse des Spülarms verlaufender Düsenschlitze versehen sein.

Der Gegenstand der Erfindung ist in der Zeichnung durch ein Ausführungsbeispiel dargestellt; es zeigt:

Fig. 1 eine Vorrichtung zum Abscheiden fester Schmutzteilchen aus Kühlwasser in einem Längsschnitt,

Fig. 2 den Gegenstand der Fig. 1 in einem Schnitt nach Linie I–I,

Fig. 3 den Gegenstand der Fig. 1 in einem Schnitt nach Linie II–II, jedoch ohne Fangsieb,

Fig. 4 einen Spülarm in einer Draufsicht entsprechend der Fig. 3, jedoch mit abgeänderten Düsenschlitzen.

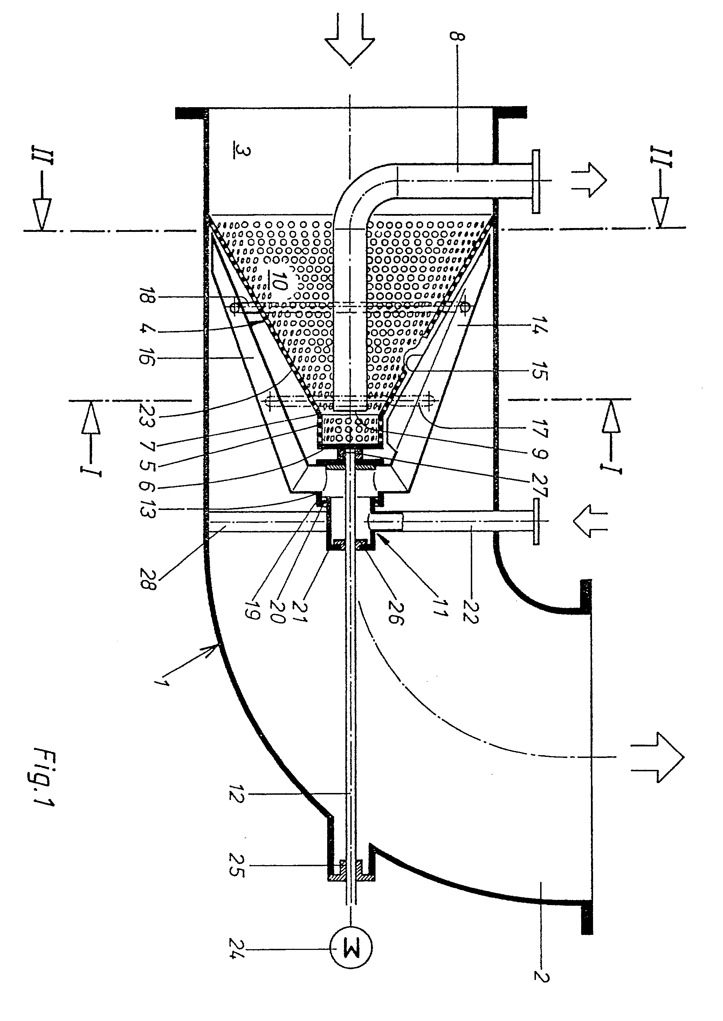

Die in den Fig. 1 bis 3 dargestellte Vorrichtung dient dem Abscheiden von Schmutzteilchen aus einer Kühlwasserleitung, für Kraftwerke u.dgl. Sie besteht aus einem rohrförmigen Gehäuse 1, das in eine Kühlwasserleitung eingebaut wird, indem es mit Endflanschen an die entsprechenden Leitungsrohre angeschlossen wird. Beim Ausführungsbeispiel ist das Gehäuse 1 mit einem Kniestück 2 versehen, doch kann auch ein linear verlaufendes Gehäuse vorgesehen sein, wobei lediglich der Antrieb für eine Druckwasserspüleinrichtung 11 angepaßt werden muß.

Zum Abfangen der vom Kühlwasser mitgerissenen Schmutzteilchen ist im Gehäuse 1 ein trichterförmiges Fangsieb 4 angeordnet, welches sich über den gesamten Querschnitt des Gehäuses 1 erstreckt, mit seinem Rand an der Innenwand 3 des Gehäuses 1 befestigt ist und mit seiner Spitze in Strömungsrichtung weist, so daß im Inneren des Fangsiebes 4 eine Fangkammer 10 gebildet wird. Die Spitze des Fangsiebes 4 ist topfförmig ausgebildet. Der Topf 5 ist an seinem zylinderförmigen Mantel siebartig perforiert, jedoch mit einem geschlossenen, d.h. nicht perforierten Boden 6 versehen.

Zum Absaugen der im Topf angesammelten Schmutzteilchen ist ein Absaugrohr 8 vorgesehen, dessen Ansaugende 9 axial in das trichterförmige Fangsieb 4 bis etwa zur Ebene der Topföffnung 7 ragt. Vor dem Fangsieb 4 ist das Absaugrohr 8 um 90° gebogen und radial nach außen durch das Gehäuse 1 geführt und an eine Saugpumpe (nicht dargestellt) angeschlossen. Die in die Fangkammer 10 vom Kühlwasser mitgeführten Schmutzteilchen werden vom Fangsieb 4 zurückgehalten und in den Topf 5 gelenkt. In Abhängigkeit von der anfallenden Menge an Schmutzteilchen wird die Saugpumpe in bestimmten Zeitabschnitten eingeschaltet, arbeitet also zyklisch. Bedarfsweise ist aber auch ein Dauerbetrieb möglich.

Das Fangsieb 4 setzt sich während des Betriebes allmählich zu und muß daher in bestimmten Zeitabständen gereinigt werden. Hierfür ist eine Druckwasserspüleinrichtung vorgesehen, die auf der Abströmseite des Fangsiebes 4 angeordnet ist. Hauptteil der Druckwasserspüleinrichtung 11 ist ein Spülarm 14, der nahe über die außen liegende Abströmfläche 23 des Fangsiebes 4 drehend bewegt wird und Spülwasser mit hohem Druck gegen diese Abströmfläche 23 spritzt, so daß am Fangsieb 4 festhaftende Schmutzteilchen in die Fangkammer 10 zurückströmen, dort in den Topf 5 gelangen und abgesaugt werden. Der Spülarm 14 erstreckt sich über die Länge des Fangsiebes 4 einschließlich des zylinderförmigen Mantels des Topfes 5, ist hohl ausgebildet und mit einem länglichen Düsenschlitz 15 versehen, der sich ebenfalls längs der Abströmfläche 23 etwa vom Boden 6 des Topfes 5 bis etwa zum Außenrand des Fangsiebes 4 erstreckt. Der Spülarm 14 schließt an einen Napf 13 an, der an einer Drehwelle 12 befestigt ist, die längs der Mittelachse des Fangsiebes 4 durch das Kniestück 2 in das Gehäuse 1 und mit ihrem inneren Ende in ein unter dem Boden 6 des Topfes 5 befestigtes Lagerteil 27 ragt. Der Rand 19 des Napfes 13 liegt gegen ein ringförmiges Gleitlager 20 einer ortsfesten Verteilerkammer 21 an, die mit einer Spülwasserleitung 22 verbunden ist. Die Verteilerkammer 21 ist mit der Spülwasserleitung 22 und einer diametral gegenüberliegenden Strebe 29 am Gehäuse 1 befestigt und wird von der Drehwelle 12 durchragt, die auch an den Lagerteilen 25 und 26 des Kniestückes 2 bzw. der Verteilerkammer 21 gelagert ist. Zum Antrieb der Drehwelle 12 ist ein Motor 24 vorgesehen. Der drehende Napf 13 und die ortsfeste Verteilerkammer 21 bilden ein Organ zum Einleiten von unter hohem Druck stehendem Spülwasser in den umlaufenden Spülarm 14. Zur Stabilisierung des Spülarms 14 und zur besseren Zuleitung des Spülwassers auf die volle Länge des Düsenschlitzes 15 ist diametral gegenüber dem Spülarm 14 am Napf 13 ein Hohlarm 16 befestigt, und die Hohlräume des Spülarms 14 bzw. Hohlarms 16 sind durch halbkreisförmige Rohrstücke 17, 18 verbunden.

Ist das Fangsieb 4 stark verschmutzt, wird die Druckwasserspüleinrichtung 11 eingeschaltet, d.h. durch den Motor 24 in Drehung versetzt und über die Spülwasserleitung 22 mit Spülwasser beschickt, das beispielsweise einen solchen Druck hat, daß es am Düsenschlitz 15 eine Strömungsgeschwindigkeit von etwa 10 m/s erhält. Der Spülarm 14 wird über seinen Anschluß am Napf 13 unmittelbar mit Spülwasser gespeist, erhält aber auch Spülwasser über den Hohlarm 16 und die halbkreisförmigen Rohrstücke 17, 18. Die Spülwirkung läßt sich dadurch verbessern, daß ein impulsartiges Spritzen erfolgt.

Der Spülarm 14 wird einmal oder mehrere Male um das Fangsieb 4 gedreht, bis der gewünschte Reinigungsgrad erzielt ist.

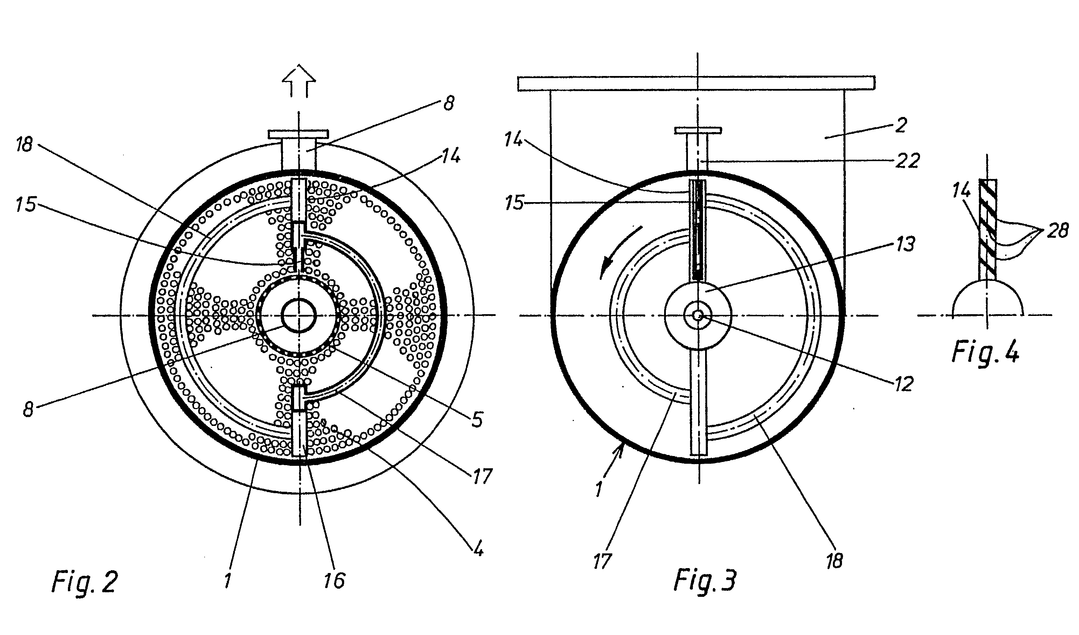

Enthält das Kühlwasser abzuscheidende faserige Schmutzteilchen, z.B. Algen, so kann anstelle des in Fig. 3 gezeigten länglichen Düsenschlitzes 15 die in Fig. 4 schematisch angedeutete Aufteilung vorgesehen werden, bei der der Spülarm 14 mit einer Vielzahl schräg zur Längsachse des Spülarms 14 verlaufenden Düsenschlitzen 28 versehen ist.

Wird alternativ anstelle eines Gehäuses 1 mit einem Kniestück 2 ein geradliniges Gehäuse verwendet, kann die Drehwelle 12 in an sich bekannter Weise mit einem Winkelgetriebe ausgerüstet sein.

## Patentansprüche

1. Vorrichtung zum Abscheiden fester Schmutzteilchen aus Kühlwasser für Kraftwerke u.dgl., bestehend aus einem vom Kühlwasser durchströmten rohrförmigen Gehäuse (1), an dessen Innenwand (3) ein trichterförmiges, mit seiner Spitze in Strömungsrichtung weisendes Fangsieb (4) befestigt ist und aus einer in der Fangkammer (10) des Fangsiebes (4) angeordneten Absaugeinrichtung, dadurch gekennzeichnet, daß eine Druckwasserspüleinrichtung (11) mit einem rotationssymmetrisch über der Abströmfläche (23) des Fangsiebes (4) verdrehbaren Spülarm versehen ist, der wenigstens einen gegen die Abströmfläche (23) gerichteten Düsenschlitz (15, 16) aufweist und mit einer motorisch antreibbaren Drehwelle (12) verbunden ist, und daß an der Spitze des Fangsiebes (4) ein mit einem geschlossenen Boden (6) versehener zylinderförmiger Topf (5) angeordnet ist, in den das Absaugende (9) eines axial angeordneten Absaugrohres (8) ragt.

2. Vorrichtung nach Anspruch 1, dadurch gekennzeichnet, daß das Ansaugende (9) des Absaugrohres (8) etwa in der Ebene der Topföffnung (7) angeordnet ist.

3. Vorrichtung nach Anspruch 1 oder 2, dadurch gekennzeichnet, daß das innere Einlaufende des Spülarms (14) an einem an der Drehwelle (12) der Druckwasserspüleinrichtung (11) befestigten Napf (13) befestigt ist, dessen Rand (19) gegen ein ringförmiges Gleitlager (20) einer ortsfesten, mit der Spülwasserleitung (22) verbundenen Verteilerkammer (21) dicht anliegt.

4. Vorrichtung nach einem der Ansprüche 1 bis 3, dadurch gekennzeichnet, daß am Napf (13) der Drehwelle (12) diametral gegenüber dem Spülarm (14) ein Hohlarm (16) befestigt ist und die Hohlräume des Spülarms (14) bzw. Hohlarms (16) durch halbkreisförmige Rohrstücke (17 bzw. 18) verbunden sind.

5. Vorrichtung nach einem der Ansprüche 1 bis 4, dadurch gekennzeichnet, daß der Spülarm (14) mit einem länglichen Düsenschlitz (15) versehen ist, der sich längs der Abströmfläche (23) des Fangsiebes (4) etwa vom Boden (6) des Topfes (5) bis etwa zum Außenrand des Fangsiebes (4) erstreckt.

6. Vorrichtung nach einem der Ansprüche 1 bis 4, dadurch gekennzeichnet, daß der Spülarm (14) entlang der Abströmfläche (23) des Fangsiebes (4) mit einer Vielzahl schräg zur Längsachse des Spülarms (14) verlaufenden Düsenschlitzen (28) versehen ist.

## Claims

1. An apparatus for separating out solid particles of dirt from cooling water for power stations or the like, the apparatus comprising: a tubular casing (1) flowed through by the cooling water and having secured to its inside wall (3) a funnel-shaped mechanically cleaned screen (4) whose apex extends in the flow direction; and an extractor device disposed in the interceptor chamber (10) of the screen (4), characterised in that a pressure water scavenger (11) has a scavenging arm rotatable in rotationally symmetrical manner over the inflow surface (23) of the screen (4), such arm being formed with at least one nozzle slot (15, 16) which extends towards the discharge surface (23) and having a rotating shaft (12) drivable by motor means, and a cylindrical pot (5) having a closed base (6) is disposed at the apex of the screen (4) and the suction end (9) of an axial extractor tube (8) extends into the pot (5).

2. An apparatus according to claim 1, characterised in that the suction end (9) of the extractor tube (8) is disposed substantially in the plane of the pot opening (7).

3. An apparatus according to claim 1 or 2, characterised in that the inner inlet end of the scavenging arm (14) is secured to a bowl-shaped member (13) secured to the shaft (12) of the scavenging device (11), the edge (19) of the member (13) being in sealing-tight engagement with an annular plain bearing (20) of a stationary distributing chamber (21) connected to the scavenging water line (22).

4. An apparatus according to any of claims 1–3, characterised in that a hollow arm is secured to the bowl-shaped member (13) diametrically opposite the scavenging arm (14) and the hollow interiors of the scavenging arm (14) and hollow arms (16) are interconnected by respective semicircular tubular members (17, 18).

5. An apparatus according to any of claims 1–4, characterised in that the scavenging arm (14) is formed with an elongate nozzle slot (15) which extends along the discharge surface (23) of the screen (4) substantially from the base (6) of the pot (5) substantially as far as the outer edge of the screen (4).

6. An apparatus according to any of claims 1–4, characterised in that the scavenging arm (14) is formed along the discharge surface (23) of the screen (4) with a number of nozzle slots (28) which extend at an inclination to the longitudinal axis of the scavenging arm (14).

## Revendications

1. Dispositif de séparation de particules d'impuretés solides de l'eau de refroidissement de centrales de production d'électricité et d'installations analogues, constitué d'une enveloppe (1) tubulaire, dans laquelle passe l'eau de refroidissement et sur la paroi interne (3) de laquelle est fixé un tamis de séparation (4) en forme de trémie à sommet pointant dans le sens du courant et d'un dispositif d'aspiration monté dans la chambre de séparation (10) du tamis de séparation (4), caractérisé en ce qu'un dispositif de lavage par de l'eau sous pression (11) est muni d'un bras de lavage, qui tourne à symétrie de révolution sur la surface aval (23) du tamis de séparation (4), qui comporte au moins une fente formant buse (15, 16) dirigée sur la surface en aval (23) et relié à un arbre (12) entraîné en rotation par un moteur, et en ce qu'au sommet du tamis de séparation (4) est monté un pot (5) cylindrique, muni d'un fond (6) fermé et dans lequel fait saillie l'extrémité d'aspiration (9) d'un tuyau d'aspiration (8) disposé axialement.

2. Dispositif suivant la revendication 1, caractérisé en ce que l'extrémité d'aspiration (9) du tuyau d'aspiration (8) est disposée sensiblement dans le plan de l'orifice du pot (7).

3. Dispositif suivant la revendication 1 ou 2, caractérisé en ce que l'extrémité intérieure se rétrécissant du bras de lavage (14) est fixée à une cuvette (13), qui est fixée à l'arbre (12) du dispositif de lavage par de l'eau sous pression (11), et dont le bord (19) s'applique sur un palier glissant (20) annulaire d'une chambre formant répartiteur (21) reliée de manière fixe au conduit d'eau de lavage (22).

4. Dispositif suivant l'une des revendications 1 à 3, caractérisé en ce qu'à la cuvette (13) de l'arbre (12) est fixé, diamétralement opposé au bras de lavage (14), un bras creux (16), et les cavités du bras de lavage (14) et du bras creux (16) communiquent par des pièces tubulaires (17 et 18) circulaires.

5. Dispositif suivant l'une des revendications 1 à 4, caractérisé en ce que le bras de lavage (14) est muni d'une fente formant buse (15) oblongue, qui s'étend le long de la surface en aval (23) du tamis de séparation (4), environ du fond (6) du pot (5), jusqu'à environ le bord extérieur du tamis de séparation (4).

6. Dispositif suivant l'une des revendications 1 à 4, caractérisé en ce que le bras de lavage (14) est muni, le long de la surface en aval (23) du tamis de séparation (4), d'un grand nombre de fentes formant buse (28), inclinées par rapport à l'axe longitudinal du bras de lavage (14).

Fig.1

EP 0 225 401 B1

Fig.2

Fig.3

Fig.4